(19) Europäisches Patentamt
European Patent Office
Office européen des brevets

(11) EP 0 918 804 B1

(12) # FASCICULE DE BREVET EUROPEEN

(45) Date de publication et mention de la délivrance du brevet:
**14.12.2005 Bulletin 2005/50**

(21) Numéro de dépôt: **97933725.0**

(22) Date de dépôt: **11.07.1997**

(51) Int Cl.[7]: **C08F 8/14**, C08F 8/30, C08F 8/44, C11C 3/00

(86) Numéro de dépôt international:
**PCT/FR1997/001293**

(87) Numéro de publication internationale:
**WO 1998/004597 (05.02.1998 Gazette 1998/05)**

(54) **PROCEDE DE STABILISATION DE POLYMERES OBTENUS A PARTIR D'ACIDES OU D'ESTERS INSATURES, POLYMERES STABILISES ET LEURS UTILISATIONS**

VERFAHREN ZUR STABILISIERUNG VON POLYMEREN, ERHÄLTLICH AUS UNGESÄTTIGTEN SÄUREN ODER ESTERN, STABILISIERTE POLYMERE UND DEREN VERWENDUNG

METHOD FOR STABILISING POLYMERS PREPARED FROM UNSATURATED ESTERS OR ACIDS, STABILISED POLYMERS AND USES THEREOF

(84) Etats contractants désignés:
**AT BE CH DE DK ES FI FR GB GR IE IT LI LU MC NL PT SE**

(30) Priorité: **31.07.1996 FR 9609852**

(43) Date de publication de la demande:
**02.06.1999 Bulletin 1999/22**

(73) Titulaire: **Novance**
**60206 Compiegne (FR)**

(72) Inventeurs:
- **CHARLEMAGNE, Dominique**
  **F-60200 Compiègne (FR)**
- **CHARLIER DE CHILY, Pierre**
  **F-60350 La Brevière (FR)**
- **PRUD'HOMME, Daniel**
  **F-60150 Thourotte (FR)**

(74) Mandataire: **Noel, Chantal Odile**
**Cabinet Beau de Loménie**
**158 rue de l'Université**
**75340 Paris Cedex 07 (FR)**

(56) Documents cités:

| | |
|---|---|
| **EP-A- 0 070 080** | **EP-A- 0 750 025** |
| **WO-A-96/14344** | **DE-A- 3 325 738** |
| **FR-A- 1 482 925** | **FR-A- 2 463 780** |
| **GB-A- 473 220** | **GB-A- 494 639** |
| **GB-A- 621 104** | **US-A- 4 120 803** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 918 804 B1

Printed by Jouve, 75001 PARIS (FR)

## Description

La présente invention a pour objet un procédé de stabilisation de polymères vis-à-vis de la température et de l'hydrolyse, obtenus à partir d'acides ou d'esters insaturés.

Elle a de même pour objet de tels polymères stabilisés ainsi que leurs utilisations.

Les composés obtenus par polymérisation d'acides ou d'esters insaturés sont bien connus. Plus particulièrement, on peut citer les polymères obtenus à partir d'huiles insaturées.

Ces composés trouvent de nombreux usages, que ce soit en tant que lubrifiant, qu'additif conférant une certaine viscosité au milieu dans lequel ils sont utilisés.

Cependant, et si leur intérêt n'est absolument pas remis en cause ici, ils présentent néanmoins quelques inconvénients lorsqu'ils sont soumis à certaines conditions. En effet, ces composés sont habituellement définis par leur indice d'iode, qui correspond à la quantité de doubles liaisons qu'ils contiennent, et par leur indice d'acide, qui correspond à la quantité de fonctions carboxyliques libres dans le polymère. Or les polymères obtenus par réaction d'acide et/ou d'esters insaturés, à l'issue de cette réaction, d'une part présentent toujours des doubles liaisons, et d'autre part, ont un indice d'acide relativement important. Les conséquences de l'existence de doubles liaisons et de la valeur élevée de l'indice d'acide se retrouvent sur la stabilité des polymères résultants. En effet les doubles liaisons des polymères sont relativement instables lorsqu'elles sont soumises à des températures élevées, phénomène aggravé par la présence de fonctions acides libres dans le polymère, fonctions qui sont des catalyseurs de la dégradation des insaturations. Or la dégradation des polymères fait que les espèces résultantes ne présentent plus les mêmes caractéristiques de viscosité souhaitées que les produits initiaux, pour ne citer que cette propriété. Par ailleurs, les fonctions acides ne sont pas souhaitées car elles entraînent une corrosion des appareils dans lesquels ils sont employés.

On a déjà proposé de transformer les doubles liaisons, par réaction avec de l'oxygène par exemple. Cependant, on obtient des huiles peroxydées qui sont connues pour être des composés très réactifs.

On a aussi proposé de réduire considérablement le nombre d'insaturations présentes dans les polymères par la mise en oeuvre d'un traitement thermique pour obtenir des huiles télomérisées. Ledit traitement est mené de manière à ce que la réaction de télomérisation soit complète. De ce fait, les huiles, après traitement, ne possèdent pas plus de 4 % d'acides gras polyinsaturés. Cependant, ce type de procédé n'est pas très souple car il ne permet pas d'obtenir, avec un même produit, une gamme de produits différents, et qui soient stables vis-à-vis de la température et de l'hydrolyse.

Le document GB 494 639 décrit par exemple un procédé de procédé de préparation d'agents dispersants, par estérification avec un acide gras ou un ester d'acide gras polymérisé, et oxydé. L'acide gras polymérisé peut être obtenu par un traitement thermique. Les agents dispersants sont utilisables pour la réalisation d'émulsions inverses. Il existe un besoin pour des polymères d'esters d'acides carboxyliques plus stables, pouvant trouver d'autres utilisation.

La présente invention propose un procédé de stabilisation de polymères obtenus à partir de composés insaturés, acides et/ou esters, permettant, en partant du même produit, et en mettant en oeuvre des étapes simples, d'obtenir une gamme très large de polymères stables vis-à-vis de la température et de l'hydrolyse.

Ces buts et d'autres sont atteints par la présente invention qui a donc pour premier objet un procédé de préparation de polymères stabilisés vis-à-vis de la température et de l'hydrolyse, dans lequel on met en oeuvre les étapes suivantes :

- on effectue un traitement thermique sous une atmosphère dépourvue d'oxygène d'un réactif ou d'un mélange de réactifs, résultant en un polymère comprenant des fonctions carboxyliques, ledit réactif ou mélange de réactifs étant comprenant un ou plusieurs groupements ester d'acide carboxylique, comprenant au moins une double liaison carbone-carbone, présentant au moins un radical aliphatique en $C_6$-$C_{24}$, et éventuellement fonctionnalisé avec au moins un groupement comprenant de l'oxygène, de l'azote, du soufre, du phosphore, seuls ou en combinaison, et choisi parmi les huiles végétales ou animales, les graisses, ainsi que leur dérivés ; les esters d'acides carboxyliques correspondant à la formule :

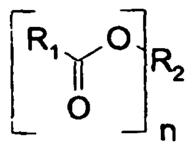

(I)

dans laquelle n est compris entre 21 et 4, $R_1$ représente un radical hydrocarboné, saturé ou comprenant au moins une insaturationé éthylénique, linéaire ou ramifié ayant de préférence 6 à 22 atomes de carbone, $R_2$ représente un radical

hydrocarboné, saturé ou insaturé, linéaire ou ramifié, ayant de 1 à 24 atomes de carbone, comprenant éventuellement un ou plusieurs groupements hydroxyles ;

- on effectue un traitement chimique du produitpolymère résultant, avec au moins un agent réagissant avec les fonctions acides carboxyliques présentes dans ledit polymère.

Un second objet de l'invention est constitué par les polymères stabilisés susceptibles d'être obtenus par le procédé précité.

Enfin, l'invention a pour objet l'utilisation de tels polymères comme agents lubrifiants ou additifs pour lubrifiants, plastifiants ou encore épaississants.

Il a été trouvé de manière tout à fait surprenante qu'il n'était pas nécessaire de faire réagir la majeure partie, voire toutes les doubles liaisons présentes dans les polymères pour obtenir des produits stables dans des conditions dures d'utilisation, telles que les températures élevées notamment.

Un avantage supplémentaire des polymères selon l'invention, est que cette stabilité thermique améliorée permet de les utiliser non seulement comme additifs minoritaires mais aussi comme constituants majoritaires de formulations.

Mais d'autres avantages et caractéristiques de l'invention apparaîtront plus clairement à la lecture de la description et des exemples qui vont suivre.

Ainsi que cela a été indiqué auparavant, le procédé selon l'invention consiste à faire réagir un réactif comprenant au moins une double liaison, présentant au moins un radical aliphatique en $C_6$-$C_{24}$, fonctionnalisé avec au moins un groupement comprenant au moins un atome d'oxygène, d'azote, de soufre, de phosphore, lesdits atomes étant présents seuls ou en combinaison.

Plus particulièrement, le réactif traité selon l'invention, s'il est fonctionnalisé, comprend au moins un groupement acide carboxylique, ester d'acide carboxylique, éther, hydroxyle, amide, amine, phosphate, sulfonate, sulfate. De préférence, on emploie des réactifs fonctionnalisés par au moins un groupement acide carboxylique, ester d'acide carboxylique, éther, hydroxyle, amide, amine.

Dans le cas où le réactif comprend plusieurs doubles liaisons, celles-ci peuvent ou non être conjuguées. On ne sortirait pas du cadre de la présente invention en employant par exemple un réactif présentant des doubles liaisons non conjuguées, auquel on ferait subir, préalablement au procédé selon l'invention, une étape visant à conjuguer ces doubles liaisons.

Selon un mode de réalisation de l'invention, le procédé de l'invention met en oeuvre des huiles végétales ou animales, ou des graisses, ou leurs dérivés. Ces huiles ou graisses peuvent être mises en oeuvre sous forme brute ou bien encore raffinée.

En tant qu'huiles d'origine animale, on peut citer entre autres, l'huile de cachalot, l'huile de dauphin, l'huile de baleine, l'huile de phoque, l'huile de sardine, l'huile de hareng, l'huile de squale, l'huile de foie de morue ; l'huile de pied de boeuf, les graisses de boeuf, de porc, de cheval, de mouton (suifs).

A titres d'exemples d'huiles d'origine végétale, on peut mentionner, entre autres, l'huile de colza, l'huile de tournesol, l'huile d'arachide, l'huile d'olive, l'huile de noix, l'huile de maïs, l'huile de soja, l'huile de lin, l'huile de chanvre, l'huile de pépins de raisin, l'huile de coprah, l'huile de palme, l'huile de graines de coton, l'huile de babassu, l'huile de jojoba, l'huile de sésame, l'huile de ricin.

De préférence, on met en oeuvre l'huile de colza, l'huile de tournesol, l'huile de soja, l'huile de lin, l'huile de ricin.

Par graisses, on entend plus particulièrement les graisses naturelles qui sont des esters de glycérol. Elles contiennent des mélanges de triglycérides d'acides gras généralement en mélange avec des acides gras saturés.

En ce qui concerne les dérivés des huiles et des graisses, le procédé selon l'invention peut être avantageusement mis en oeuvre avec les produits d'alcoolyse, de préférence de méthanolyse. Ceci est particulièrement approprié pour les huiles, et préférentiellement les huiles de colza.

Ainsi, selon un mode de réalisation particulier de l'invention, le procédé consiste à traiter au moins un réactif choisi parmi les esters d'acides carboxyliques en $C_6$-$C_{22}$ ou le mélange de ces réactifs, qui peut être symbolisé par la formule (I).

Le radical $R_1$ comprend au moins une insaturation éthylénique, qui peut ou non être conjuguée. Plus particulièrement, le radical $R_1$ comprend 1 à 5 insaturations, et de préférence, de 1 à 3 insaturations.

De préférence le radical $R_2$ comprend 1 à 10 atomes de carbone, et encore plus préférentiellement entre 1 et 6 atomes de carbone. Si le radical $R_2$ comprend au moins une insaturation, de préférence des insaturations éthyléniques, celles-ci peuvent ou non être conjuguées. De préférence, le radical $R_2$ est un radical hydrocarboné saturé, comprenant éventuellement un ou plusieurs groupements hydroxyles.

En ce qui concerne la partie acide carboxylique, on peut citer de préférence les acides gras insaturés présentant une seule double liaison tel que l'acide lindérique, l'acide myristoléique, l'acide palmitoléique, l'acide oléique, l'acide pétrosélénique, l'acide doeglique, l'acide gadoléique, l'acide érucique ; les acides gras insaturés présentant

deux doubles liaisons tels que l'acide linoléique ; les acides gras insaturés présentant 3 doubles liaisons tels que l'acide linolénique ; les acides gras insaturés présentant plus de 4 doubles liaisons tels que l'acide isanique, l'acide stéarodonique, l'acide arachidonique, l'acide chypanodonique ; les acides gras insaturés porteurs de groupe hydroxyle tel que l'acide ricinoléique ainsi que leurs mélanges.

En ce qui concerne la partie alcool de l'ester, en d'autres termes, lorsque le radical $R_2$ est différent de l'hydrogène, on peut citer par exemple le méthanol, l'éthanol, le propanol, l'ispropanol, le butanol, l'isobutanol, l'octanol, le 2 éthyl hexanol, le glycérol, le glycol, le propylène glycol, l'éthylène glycol, le polyéthylène glycol, le polypropylène glycol, le néopentylglycol, le pentaérythritol, l'hydroxy pivalate de néopentylglycol, le dipentaérythritol, le triméthylolpropane, le sorbitol, le mannitol, le xylitol, le mésoérythritol.

Il est à noter que le procédé selon l'invention peut être mis en oeuvre, de manière avantageuse, avec un réactif ou un mélange de plusieurs d'entre eux, que ceux-ci appartiennent ou non à l'une ou l'autre des variantes qui viennent d'être décrites.

La première étape du procédé selon l'invention consiste donc en un traitement thermique.

Ce dernier est plus particulièrement mis en oeuvre à une température inférieure à celle de dégradation du polymère résultant.

Selon un mode de réalisation préféré, la température à laquelle on effectue le traitement thermique est comprise entre 200 et 400°C. De préférence, cette température est comprise entre 250 et 350°C.

En outre, ledit traitement thermique est mis en oeuvre sous une atmosphère contrôlée, dépourvue d'oxygène. Ainsi, de manière avantageuse, le traitement thermique est réalisé sous azote ou sous un gaz rare, comme l'argon, l'hélium, le néon, ces gaz pouvant être employés seuls ou en mélange.

Généralement, le traitement thermique est mis en oeuvre sous une pression réduite, c'est-à-dire inférieure ou égale à 100 hPa, voire de préférence inférieure ou égale à 50 hPa. Bien entendu, on ne sortirait pas du cadre de la présente invention en mettant en oeuvre ledit traitement thermique sous une pression supérieure ou égale à la pression atmosphérique.

Le traitement thermique peut être réalisé avec ou sans catalyseur.

Selon cette première possibilité, on peut utiliser des catalyseurs homogènes ou hétérogènes. Parmi les catalyseurs homogènes convenables, on peut nommer par exemple l'anthraquinone, l'anhydride sulfureux, les sels solubles de nickel. Parmi les catalyseurs hétérogènes, on peut citer sans intention de se limiter, les zéolithes, les résines échangeuses d'ions sous forme acide. Il est à noter que si un catalyseur est employé, on préfère le choisir dans la catégorie des catalyseurs hétérogènes.

Mais de préférence, le traitement thermique est effectué de manière avantageuse, en l'absence de toute substance catalytique.

La durée du traitement thermique selon l'invention dépend, d'une part des conditions de température, de la présence ou non d'un catalyseur et d'autre part, du niveau de viscosité que l'on souhaite obtenir pour le polymère résultant. Il est fait remarquer que l'homme du métier est tout à fait à même de déterminer la durée nécessaire du traitement thermique, sachant que les niveaux de viscosité sont fonction de l'application ultérieure du polymère stabilisé selon l'invention.

Par exemple, dans le cas d'applications en tant que lubrifiant, les niveaux de viscosité sont définis par une norme ISO VG (ISO 3448).

Selon cette norme, on obtient des viscosités cinématiques allant de 5 à 1500 $mm^2/s$, mesurées à 40°C.

Une fois la viscosité souhaitée atteinte, le traitement thermique est arrêté. Ceci consiste à baisser la température du mélange réactionnel en dessous du seuil ou la polymérisation a lieu. A titre purement indicatif, l'écart de température est de l'ordre de 10 à 50°C.

Cette opération peut avoir lieu par tout moyen connu de l'homme du métier. Ainsi, on peut soumettre le mélange réactionnel à un flux gazeux inerte, ou bien mettre le produit sous vide.

A l'issue du traitement thermique, on obtient un polymère présentant un niveau de viscosité approprié, et pouvant comprendre encore des insaturations.

Le polymère résultant de cette première étape comprend de même des fonctions carboxyliques. Le nombre de ces fonctions, qui est proportionnel à l'indice d'acide, est déterminé grâce, par exemple, à une mesure titrimétrique correspondant à la norme NF T 60.204.

Le polymère ainsi obtenu subit ensuite une étape de traitement chimique.

Cette étape consiste à mettre en contact le polymère issu de l'étape précédente avec au moins un agent réagissant avec les fonctions acides carboxyliques présentes dans ledit produit, de manière à baisser l'indice d'acide.

Selon un premier mode de réalisation de cette étape de traitement chimique, ledit agent est choisi parmi les monoalcools ou les polyols, ces composés pouvant être utilisés seuls ou en combinaison.

Cet agent comprend au moins un radical hydrocarboné, saturé ou non, linéaire ou ramifié, comprend 1 à 24 atomes de carbone. De préférence le radical comprend 1 à 10 atomes de carbone, et encore plus préférentiellement entre 1 et 6 atomes de carbone. De préférence, l'agent est choisi parmi les composés saturés. On ne sortirait pas du

cadre de la présente invention en employant par exemple des composés comprenant d'autres radicaux, dans la mesure où lesdits radicaux ne contribuent pas à augmenter l'indice d'acidité du polymère obtenu, comme par exemple les fonctions esters. En outre, l'agent peut se trouver sous une forme de monomère, d'oligomère, de polymère, ou un mélange de plusieurs formes.

A titre d'exemples non limitatifs d'alcools utilisables, on peut citer le méthanol, l'éthanol, le propanol, l'isopropanol, le butanol, l'isobutanol, l'octanol, le 2 éthyl hexanol, le glycérol, le polyglycérol, le glycol, le propylène glycol, l'éthylène glycol, le polyéthylène glycol, le polypropylène glycol, le néopentylglycol, le pentaérythritol, l'hydroxy pivalate de néopentylglycol, le dipentaérythritol, le triméthylolpropane, le sorbitol, le mannitol, le xylitol, le mésoérythritol.

Selon un mode de réalisation préféré de l'invention, on utilise pour ce traitement chimique au moins un polyol.

Selon cette voie, l'acidité est neutralisée en synthétisant les esters correspondants

Selon un second mode de réalisation de cette étape de traitement chimique, ledit agent est choisi parmi les composés comprenant au moins un groupement époxyde terminal ou central, ces composés pouvant être utilisés seuls ou en combinaison.

Plus particulièrement, le second agent peut être représenté par la formule suivante :

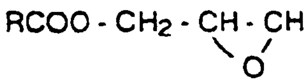

**(II)**

formule dans laquelle R représente un radical aliphatique, linéaire ou ramifié, en $C_1$-$C_{21}$. De préférence, on met en oeuvre un réactif dont le radical R correspond au groupement suivant $(R')_3C$-, dans lequel R' représente un radical aliphatique comprenant de 1 à 10 atomes de carbone.

Il est de même possible de mettre en oeuvre des composés du type des esters glycidyliques des acides pélargonique, heptanoïque, valérique, isostéarique ou encore oléïque.

A titre de produit convenant particulièrement à la réalisation de l'invention, on peut citer l'ester glycidylique commercialisé par la société Shell, sous la dénomination Cardura E10 ®.

Selon cette voie, l'acidité est neutralisée en synthétisant les esters correspondants

Selon un troisième mode de réalisation de cette étape de traitement chimique, ledit agent est choisi parmi les hydroxydes de métaux alcalins ou alcalino-terreux, les bicarbonates de métaux alcalins, les hydroxydes d'ammonium quaternaires, les oxydes, hydroxydes ou encore les sels, de préférence solubles, de métaux choisis parmi le zinc, l'aluminium, le plomb, les métaux alcalins et alcalino-terreux.

A titre d'exemples d'agents de ce type, on peu citer par exemple l'hydroxyde de sodium, l'hydroxyde de potassium, le bicarbonate de sodium, l'hydroxyde de tétraméthyl ammonium, l'hydroxyde de tétraéthyl ammonium, l'hydroxyde de tétrapropyl ammonium, l'hydroxyde de tétrabutyl ammonium, le chlorure de calcium, le carbonate de zinc.

Dans le cas de cette troisième variante, l'acide est neutralisé en créant des sels d'acides.

Selon un quatrième mode de réalisation de cette étape de traitement chimique, ledit agent est choisi parmi le trichlorure de phosphore, le pentachlorure de phosphore, de chlorure de thionyle. Cette variante consiste à neutraliser l'acidité par création de fonctions chlorures d'acide.

Selon une cinquième possibilité, l'agent est choisi parmi l'ammoniac, l'ammoniaque, les amines primaires ou secondaires, saturées ou non, linéaires ou ramifiées, comprenant 1 à 10 atomes de carbone, et comprenant éventuellement un ou plusieurs groupements hydroxyles.

Par exemple, la méthylamine, l'éthylamine, la diméthylamine, la diéthylamine, la monoéthanoiamine, la diéthanolamine.

Il est à noter que la seconde étape de traitement selon l'invention peut être conduite avec l'un ou plusieurs des agents précités, qu'ils appartiennent ou non à la même catégorie.

Dans cette étape, la quantité d'agent total entrant dans la réaction est telle que le nombre de moles d'agent (s) correspond à une quantité stoechiométrique ou à un excès par rapport aux fonctions carboxyliques libres présentes dans le produit issu du traitement thermique. Par agent total, on entend l'agent s'il est employé seul, ou le mélange de plusieurs d'entre eux, s'ils sont mis en oeuvre en combinaison.

Plus particulièrement, on peut mettre en oeuvre une quantité d'agent telle que l'excès mentionné auparavant est compris entre 5 et 150% molaire, de préférence entre 70 et 130%.

Dans les cas où le traitement chimique est réalisé avec une combinaison d'agents, et dans le cas plus particulier où dans cette combinaison figure le second agent, il est à noter que les quantités en premier, et troisième à cinquième agents sont calculées de préférence, de manière à rendre l'indice d'acide du produit issu de l'étape de traitement thermique, inférieur ou égal à 7, de préférence inférieur ou égale à 5. Quant à la quantité en second agent, elle est habituellement telle qu'elle permet de diminuer ledit indice d'acide à une valeur inférieure ou égale à 1,5, plus particulièrement inférieure ou égale à 1 et de préférence inférieure ou égale à 0,5.

Selon un mode de réalisation particulièrement avantageux de l'invention, l'étape de traitement chimique est mise en oeuvre avec au moins un premier agent et au moins un second agent tels que définis auparavant.

Une variante de ce mode particulier consiste à mettre en oeuvre le traitement chimique en présence des deux types d'agents, de façon simultanée.

Selon ce premier mode, la quantité des deux agents employée est telle que le nombre de moles desdits agents correspond au nombre de moles de fonctions acides carboxyliques libres dans le polymère à traiter ou bien en excès par rapport à ce nombre. Plus particulièrement, on peut mettre en oeuvre une quantité des agents telle que l'excès mentionné auparavant soit compris entre 5 et 150% molaire, de préférence entre 70 et 130%.

De préférence, la proportion du premier agent, c'est-à-dire en agent comprenant au moins un hydroxyle libre, par rapport au second est plus élevée que celle en époxyde. Il est à noter que la quantité en premier agent est, en général, calculée de manière à rendre l'indice d'acide inférieur ou égal à 7, de préférence inférieur ou égal à 5, et la quantité en second agent correspond, plus particulièrement, à celle nécessaire pour diminuer ledit indice d'acide à une valeur inférieure ou égale à 1,5, plus particulièrement inférieure ou égale à 1 et de préférence inférieure ou égale à 0,5.

Selon une seconde variante du mode de réalisation particulier de l'étape de traitement chimique, on effectue ledit traitement en utilisant successivement le premier puis le second agent. Cette méthode est préférée.

Le second agent est introduit dans le mélange réactionnel à partir du moment où l'indice d'acide est inférieur ou égal à 7, de préférence inférieur ou égal à 5.

Quel que soit l'agent ou les agents employés dans le cadre de cette seconde étape du traitement selon l'invention, ce dernier peut être mis en oeuvre en présence ou en l'absence d'un solvant.

Selon une variante particulièrement avantageuse de la présente invention, le traitement chimique est effectué en présence d'un solvant choisi de telle sorte qu'il forme un azéotrope avec l'eau.

Les solvants classiques conviennent à la mise en oeuvre de cette variante, comme par exemple le toluène, le xylène, le benzène, le mésitylène.

La quantité de solvant mis en jeu dépend de la quantité d'eau à éliminer et peut être déterminée sans difficulté par l'homme du métier. Elle est classiquement inférieure à 10 % en poids du mélange réactionnel.

Cette étape de traitement chimique peut être réalisée en présence ou non d'un catalyseur. De préférence, on emploie un tel composé.

Les catalyseurs sont choisis parmi les composés susceptibles de favoriser des actions d'estérification, qu'ils soient solubles ou non dans le mélange réactionnel.

A titre de catalyseur soluble, on peut citer les composés acides ou basiques. Ainsi, on peut utiliser l'acide paratoluène sulfonique, les acides minéraux comme l'acide sulfurique, l'acide phosphorique. On peut de même utiliser des composés basiques tels que la soude, la potasse, les alcoolates de métaux alcalins ou alcalino-terreux, les sels métalliques.

A titre de composés insolubles dans le mélange réactionnel, on peut mentionner les résines échangeuses d'ions, les zéolithes, par exemple.

Le traitement chimique est effectué généralement à une température comprise entre 150 et 250°C. De préférence, la température est comprise entre 190 et 210°C. Il est cependant à noter que de telles valeurs ne sont données qu'à titre indicatif car elles dépendent notamment de la présence ou non et de la nature du catalyseur employé dans la réaction.

Dans le cas où un solvant formant un azéotrope avec l'eau est utilisé, la température dudit traitement chimique est voisine de celle de l'azéotrope.

La durée de cette étape de traitement thermique peut être déterminée de manière simple pour l'homme de l'art, car il suffit de constater que le solvant ne distille plus, ou bien encore de contrôler l'évolution de l'indice d'acide du produit obtenu.

De manière habituelle, la durée du traitement chimique est comprise entre 30 minutes et 15 heures.

Lorsqu'un solvant est employé, il est préférable de procéder à une élimination de toute trace de solvant restant dans le mélange. Cette opération est effectuée par tout moyen connu, comme par exemple la distillation.

Lorsque la réaction est terminée, on peut procéder à une étape de séchage du polymère obtenu. Cette étape a lieu de manière connue comme par exemple une distillation sous vide, ou bien encore l'emploi de composés dessiccatifs du type des sulfates de sodium, de magnésium, de calcium, des carbonates de sodium, de potassium, ou bien de chlorure de calcium.

On procède en général de manière à conserver une teneur en eau dans le polymère voisine ou inférieure à 500 ppm. Bien entendu cela peut être adapté en fonction des applications ultérieures dudit polymère.

Préalablement à cette étape de séchage, on peut effectuer, si nécessaire, une désodorisation du polymère obtenu.

La désodorisation peut avoir lieu notamment par entraînement à la vapeur d'eau dans le mélange réactionnel.

Cette opération est mise en oeuvre généralement à une température comprise entre 100 et 250°C.

La durée de la désodorisation est habituellement comprise entre 10 et 180 minutes.

Le polymère obtenu est ensuite filtré.

Un autre objet de la présente invention est constitué par des polymères susceptibles d'être obtenus en mettant en oeuvre le procédé qui vient d'être décrit.

Ces polymères présentent de manière avantageuse une viscosité contrôlée et modulable. En effet, le procédé selon l'invention permet, à partir d'un même réactif, de produire plusieurs produits présentant divers niveaux de viscosités ainsi que des valeurs d'indice d'acide très faibles.

En effet, les polymères selon l'invention présentent plus particulièrement un indice d'acide inférieur ou égal à 1,5. De préférence, cet indice d'acide est inférieur ou égal à 1 et de manière encore plus avantageuse, il est inférieur ou égal à 0,5. Cette caractéristique fait que les polymères susceptibles d'être obtenus selon le procédé de l'invention sont particulièrement stables, plus particulièrement vis-à-vis de réactions d'hydrolyse, et de dégradation thermique. En outre, les difficultés liées à la corrosivité des polymères sont considérablement diminuées.

Par ailleurs, les polymères selon l'invention sont stables vis-à-vis de la température du fait, entre autres, de leur nombre plus réduit d'insaturations.

En outre, les risques d'incompatibilité avec d'autres huiles sont diminués de manière caractéristique, ce qui les rend très adaptés pour des utilisations comme additifs dans des compositions comprenant des huiles ou des graisses.

Les polymères selon l'invention peuvent trouver des applications dans divers domaines, en tant qu'agents épaississants, plastifiants pour polymères, lubrifiants.

Du fait de leur compatibilité importante avec les huiles végétales et leurs dérivés (ester), les polymères selon l'invention peuvent être employés comme épaississants, comme additifs améliorant la viscosité ou l'onctuosité de solutions, d'émulsions ou encore de dispersions. Ces propriétés peuvent par exemple trouver un intérêt dans les domaines de l'alimentaire, de l'agrochimie, des encres, de la cosmétique, de la pharmacie.

Les polymères selon l'invention peuvent entrer dans la formulations de matières plastiques ou d'élastomères, en tant qu'agents plastifiants internes ou externes. Par exemple, on peut les mettre en oeuvre dans des formulations destinées à la préparation d'objets moulés ou extrudés, comme par exemple la fabrication de bouteilles, d'huisseries, de mobilier. On peut de même les employer pour la préparation de films étirables. Les polymères selon l'invention peuvent aussi trouver une utilisation dans la préparation d'objets à base d'élastomères, comme les tuyaux , les canalisations, les pneumatiques.

Du fait de leurs capacités lubrifiantes, on peut les employer comme additifs ou comme lubrifiants. Comme applications possibles de tels composés, on peut citer les fluides de démoulage, les fluides d'ensimage, les fluides hydrauliques, les huiles pour engrenages (réducteurs), le travail des métaux, etc.

Il est de même envisageable de fonctionnaliser les doubles liaisons restantes, selon des méthodes connues de phosphatation, de sulfonation, sulfatation, époxydation, hydrogénation, hydroxylation, addition d'halogène, hydroformylation, de manière à obtenir des polymères appropriés pour des applications comme additifs anti-usure, additifs extrême-pression, additifs anti-corrosion, etc.

Des exemples concrets mais non limitatifs de l'invention vont maintenant être présentés.

## <u>Exemple 1</u>

Cet exemple illustre la synthèse d'un polymère de viscosité 46 $mm^2/s$ à 40°C et d'indice d'acide inférieur à 1,5.

Dans un ballon propre et sec, on introduit 5 kg d'huile de colza raffinée.

Le milieu réactionnel est mis sous azote et agitation.

La température est amenée à 150°C.

La pression est réduite à une valeur d'environ 20 hPa résiduelle.

Le milieu réactionnel est alors chauffé à une température de 280-285°C.

La réaction est conduite jusqu'à obtenir la viscosité voulue (norme ISO VG 46 : 41,4-50,6 $mm^2/s$).

Lorsque la viscosité désirée est atteinte, le milieu est refroidi à une température de 200°C, sous vide.

On effectue ensuite un traitement chimique avec de la glycérine.

Pour cela on détermine l'indice d'acide selon la méthode titrimétrique conforme à la norme NF T 60-204.

La quantité de glycérine ajoutée est telle que l'on obtient finalement un indice d'acide inférieur à 1,5 en ayant ajouté un excès de 100 % molaire par rapport au nombre de moles d'acide carboxylique dans le polymère obtenu.

On réalise cette étape avec un catalyseur de type sel d'étain et un solvant d'azéotropie de type xylène.

La température est alors amenée à 230°C afin d'obtenir un bon azéotrope.

La réaction est maintenue jusqu'à obtenir l'indice d'acide voulu.

Le solvant d'azéotropie est alors distillé. Puis le milieu réactionnel est refroidi à une température de 150°C pour l'étape de désodorisation.

Le milieu réactionnel est alors maintenu à une température de 150°C, sous vide, pendant 1h30 avec un flux

de vapeur d'eau pour entraînement des parties volatiles.

Le séchage est ensuite effectué pendant 30 minutes à une température de 150°C. sous vide, pour obtenir une teneur en eau finale inférieure à 500 ppm.

Le produit est alors filtré.

Les caractéristiques du produit final sont les suivantes :

| | |
|---|---|
| Viscosité à 40°C (ASTM D 445) | 41,4-50,6 $mm^2/s$ |
| Viscosité à 100°C (ASTM D 445) | 9-9,5 $mm^2/s$ |
| Indice de viscosité (ASTM D 2270) | 189 |
| Viscosité à -20°C (ASTM D 445) | 2842 $mm^2/s$ environ |
| Point d'éclair PMCC (ASTM D 93) | 250°C environ |
| Point d'écoulement (ASTM D 97) | -21°C environ |
| Point trouble (ASTM D 2500) | -9°C environ |
| Indice d'acide (NF T 60-204) | < 1,5 mg KOH/g |
| Indice d'iode (ASTM D 1959) | 100-110 $gI_2/100g$ |
| Indice de saponification (ASTM D 1962) | 190-210 mg KOH/g |
| Densité à 20°C (NF T 60-101) | 0,908-0,932 |
| Couleur GARDNER (ASTM D 1544) | < 5 |
| Teneur en eau (NF T 60-225) | < 0.05 % |

**Exemple 2**

Cet exemple illustre la synthèse d'un polymère de viscosité 460 $mm^2/s$ à 40°C, à partir d'huile de tournesol raffinée. L'indice d'acide de ce polymère est également inférieur à 1,5.

Le même mode opératoire que l'exemple 1 est appliqué à une huile de tournesol et permet d'obtenir un produit dont la viscosité correspond à la norme ISO VG 460 : 414-506 $mm^2/s$ à 40°C.

Les caractéristiques du produit final sont les suivantes :

| | |
|---|---|
| Viscosité à 40°C (ASTM D 445) | 414-506 $mm^2/s$ |
| Viscosité à 100°C (ASTM D 445) | 50-60 $mm^2/s$ |
| Indice de viscosité (ASTM D 2270) | 180 |
| Point d'éclair PMCC (ASTM D 93) | 250°C environ |
| Point d'écoulement (ASTM D 97) | -2°C environ |
| Point trouble (ASTM D 2500) | -1 °C environ |
| Indice d'acide (NF T 60-204) | < 1,5 mg KOH/g |
| Indice d'iode (ASTM D 1959) | 80-90 $gI_2/100g$ |
| Indice de saponification (ASTM D 1962) | 190-210 mg KOH/g |
| Densité à 20°C (NF T 60-101) | 0,930-0,940 |
| Couleur GARDNER (ASTM D 1544) | < 8 |
| Teneur en eau (NF T 60-225) | < 0,05 % |

La stabilité à l'hydrolyse du polymère ci-dessus a été lestée.

Les mesures, conformément à la norme ASTM D 2619, ont été effectuées sur le polymère dilué à 5 % dans une huile minérale 150 NS.

Les résultats sont les suivants :

| | |
|---|---|
| corrosion cuivre ($mg/cm^2$) | 0,03 |
| cotation ASTM | 2a |
| Δ acidité (huile) (mg KOH/g) | < 0,05 |
| acidité (eau) (mg KOH/g) | 0,09 |

Ces résultats confirment l'excellente stabilité des polymères vis-à-vis de l'hydrolyse.

## Revendications

1. Procédé de préparation de polymères stabilisés vis-à-vis de la température et de l'hydrolyse, dans lequel on met en oeuvre les étapes suivantes :

   - on effectue un traitement thermique sous une atmosphère dépourvue d'oxygène d'un réactif ou d'un mélange de réactifs, résultant en un polymère comprenant des fonctions carboxyliques, ledit réactif ou mélange de réactifs étant choisi parmi les esters d'acides carboxyliques correspondant à la formule :

   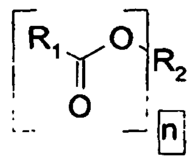 (I)

   dans laquelle n est compris entre 1 et 4, $R_1$ représente un radical hydrocarboné comprenant au moins une insaturation éthylénique, linéaire ou ramifié ayant 6 à 22 atomes de carbone, $R_2$ représente un radical hydrocarboné, saturé ou insaturé, linéaire ou ramifié, ayant de 1 à 24 atomes de carbone, comprenant éventuellement un ou plusieurs groupements hydroxyles ;

   - on effectue un traitement chimique du polymère résultant, avec au moins un agent réagissant avec les fonctions acides carboxyliques présentes dans ledit polymère.

2. Procédé selon la revendication précédente, **caractérisé en ce que** l'on effectue le traitement thermique à une température comprise entre 200 et 400°C.

3. Procédé selon l'une quelconque des revendications précédentes, **caractérisé en ce que** l'on effectue le traitement chimique en présence d'un premier agent choisi parmi les monoalcools, les polyols, d'un second agent choisi parmi les composés comprenant au moins un groupement époxyde terminal ou central, d'un troisième agent choisi parmi les hydroxydes de métaux alcalins ou alcalino-terreux, les bicarbonates de métaux alcalins, les ammonium quaternaires, les sels de métaux choisis parmi le zinc, l'aluminium, le plomb, les métaux alcalins et alcalino-terreux, d'un quatrième agent choisi parmi le trichlorure de phosphore, le pentachlorure de phosphore, de chlorure de thionyle, d'un cinquième agent choisi parmi les amines, ces agents pouvant. être utilisés seuls ou en combinaison.

4. Procédé selon la revendication précédente, **caractérisé en ce que** l'on effectue le traitement chimique en présence d'un premier agent choisi parmi les monoalcools, les polyols, et d'un second agent choisi parmi les composés comprenant au moins un groupement époxyde terminal ou central.

5. Procédé selon l'une quelconque des revendications 3 ou 4, **caractérisé en ce que** le second agent correspond à la formule suivante (II) :

   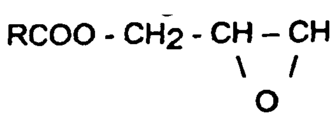

   formule dans laquelle R représente un radical aliphatique, linéaire ou ramifié, en $C_1$-$C_{21}$.

6. Procédé selon l'une quelconque des revendications 3 à 5, **caractérisé en ce que** l'on effectue le traitement chimique en présence simultanée des premier et second agents.

7. Procédé selon la revendication précédente, **caractérisé en ce que** la proportion du premier agent est calculée de manière à rendre l'indice d'acide inférieur ou égal à 7 et la quantité en second agent correspond à celle nécessaire pour diminuer ledit indice d'acide à une valeur inférieure ou égale à 1,5.

8. Procédé selon l'une quelconque des revendications 3 à 5, **caractérisé en ce** l'on effectue le traitement chimique en utilisant successivement le premier puis le second agent.

9. Procédé selon la revendication précédente, **caractérisé en ce** l'on introduit le second agent dans le mélange réactionnel à partir du moment où l'indice d'acide est inférieur ou égal à 7.

10. Procédé selon l'une quelconque des revendications 3 à 9, **caractérisé en ce que** l'on effectue le traitement chimique avec une quantité d'agent totale telle que le nombre de moles d'agent(s) correspond à une quantité stoechiométrique ou, en excès par rapport au nombre de moles de fonctions carboxyliques libres présentes dans le polymère résultant du traitement thermique.

11. Procédé selon l'une quelconque des revendications précédentes, **caractérisé en ce que** l'on effectue le traitement chimique en présence d'un solvant formant un azéotrope avec l'eau.

12. Procédé selon l'une quelconque des revendications précédentes, **caractérisé en ce que** l'on effectue le traitement chimique à une température comprise entre 150 et 250°C, et le cas échéant à une température voisine de la température de l'azéotrope.

13. Procédé selon l'une quelconque des revendications précédentes, **caractérisé en ce que** l'on effectue une étape de séchage à l'issue du traitement chimique.

14. Procédé selon l'une quelconque des revendications précédentes, **caractérisé en ce que** l'on effectue une étape de désodorisation à l'issue du traitement chimique.

15. Procédé selon l'une quelconque des revendications précédentes, **caractérisé en ce que** l'on effectue une étape de fonctionnalisation des doubles liaisons carbone-carbone restantes.

16. Polymère stabilisé vis-à-vis de la température et de l'hydrolyse, susceptible d'être obtenu en mettant en oeuvre le procédé selon l'une quelconque des revendications 1 à 15 ; ledit polymère présentant un indice d'acide inférieur ou égal à 1,5.

17. Polymère selon la revendication 16, **caractérisé en ce qu'**il présente un indice d'acide inférieur ou égal à 1, de préférence inférieur ou égal à 0,5.

18. Utilisation du polymère selon l'une des revendications 16. ou 17, ou susceptible d'être obtenu selon l'une quelconque des revendications 1 à 15, comme lubrifiant, ou additif pour lubrifiant.

19. Utilisation du polymère selon l'une des revendications 16 ou 17, ou susceptible d'être obtenu selon l'une quelconque des revendications 1 à 15, comme épaississant.

20. Utilisation du polymère selon l'une des revendications 16 ou 17, ou susceptible d'être obtenu selon l'une quelconque des revendications 1 à 15 comme plastifiant pour polymères.

21. Utilisation du polymère selon l'une des revendications 16 ou 17, ou susceptible d'être obtenu selon l'une quelconque des revendications 1 à 15, comme additifs anti-usure, additifs extrème-pression, additifs anti-corrosion.

## Patentansprüche

1. Verfahren zur Herstellung von Polymeren, die gegenüber Temperatur und Hydrolyse stabilisiert sind, in welchem man die folgenden Schritte einsetzt:

   - man führt eine thermische Behandlung unter einer sauerstofffreien Atmosphäre von einem Reagenz oder einem Reagenzgemisch durch, das zu einem Polymer führt, das Carboxylsäurefunktionen umfaßt, wobei das Reagenz oder Reagenzgemisch gewählt wird unter den Carboxylsäureestern, die der Formel entsprechen:

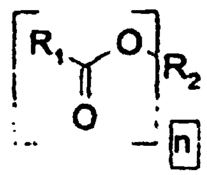

(I)

in welcher n zwischen 1 und 4 liegt, $R_1$ einen Kohlenwasserstoffrest darstellt, der wenigstens eine ethylenische Unsättigung umfaßt, linear oder verzweigt ist mit 6 bis 22 Kohlenstoffatomen, $R_2$ ein Kohlenwasserstoffrest, gesättigt oder ungesättigt, linear oder verzweigt mit 1 bis 24 Kohlenstoffatomen darstellt, der gegebenenfalls eine oder mehrere Hydroxylgruppen umfaßt;

- man führt eine chemische Behandlung des resultierenden Polymers mit wenigstens einem Reagenz durch, das mit den Carboxylsäurefunktionen reagiert, die in dem Polymer vorliegen.

**2.** Verfahren nach dem vorhergehenden Anspruch, **dadurch gekennzeichnet, daß** man die thermische Behandlung bei einer Temperatur zwischen 200 und 400°C durchführt.

**3.** Verfahren nach einem der vorhergehenden Ansprüche, **dadurch gekennzeichnet, daß** man die chemische Behandlung in Gegenwart eines ersten Reagenzes durchführt, das gewählt ist unter den Monoalkoholen, den Polyolen, einem zweiten Reagenz, das gewählt ist unter den Verbindungen, die wenigstens eine terminale oder zentrale Epoxidgruppe umfassen, einem dritten Reagenz, das gewählt ist unter den Hydroxiden von Alkali- oder Erdalkalimetallen, den Bicarbonaten von Alkalimetallen, den quaternären Ammonium, den Metallsalzen, gewählt unter Zink, Aluminium, Blei, den Alkalimetallen und Erdalkalimetallen, einem vierten Reagenz, gewählt unter Phosphortrichlorid, Phosphorpentachlorid, Thionylchlorid, einem fünftem Reagenz, das gewählt ist unter den Aminen, wobei diese Reagenzien allein oder in Kombination verwendet werden können.

**4.** Verfahren nach dem vorhergehenden Anspruch, **dadurch gekennzeichnet, daß** man die chemische Behandlung in Gegenwart eines ersten Reagenzes durchführt, das gewählt wird unter den Monoalkoholen, den Polyolen und einem zweiten Reagenz, das gewählt wird unter den Verbindungen, die wenigstens eine terminale oder zentrale Epoxidgruppe umfassen.

**5.** Verfahren nach einem der Ansprüche 3 oder 4, **dadurch gekennzeichnet, daß** das zweite Reagenz der folgenden Formel (II) entspricht:

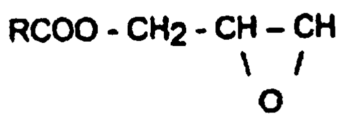

wobei in der Formel R ein aliphatisches, lineares oder verzweigtes Radikal von $C_1$ - $C_{21}$ darstellt.

**6.** Verfahren nach einem der Ansprüche 3 bis 5, **dadurch gekennzeichnet, daß** man die chemische Behandlung bei gleichzeitiger Gegenwart der ersten und zweiten Reagenzien durchführt.

**7.** Verfahren nach dem vorhergehenden Anspruch, **dadurch gekennzeichnet, daß** der Anteil des ersten Reagenzes derart berechnet wird, daß die Säurezahl kleiner oder gleich 7 gemacht wird und die Menge an zweitem Reagenz jener entspricht, die notwendig ist, um die Säurezahl auf einen Wert unter oder gleich 1,5 zu vermindern.

**8.** Verfahren nach einem der Ansprüche 3 bis 5, **dadurch gekennzeichnet, daß** man die chemische Behandlung unter aufeinanderfolgender Verwendung des ersten und dann des zweiten Reagenzes durchführt.

**9.** Verfahren nach dem vorhergehenden Anspruch, **dadurch gekennzeichnet, daß** man das zweite Reagenz in das Reaktionsgemisch von dem Moment an einführt, wo die Säurezahl kleiner oder gleich 7 ist.

**10.** Verfahren nach einem der Ansprüche 3 bis 9, **dadurch gekennzeichnet, daß** man die chemische Behandlung

mit einer Menge an Gesamtreagenz derart durchführt, daß die Anzahl von Molen an Reagenz(ien) einer stöchiometrischen Menge oder einem Überschuß im Verhältnis zur Anzahl von Molen an freien Carboxylfunktionen entspricht, die in dem Polymer vorliegen, das aus der thermischen Behandlung resultiert.

**11.** Verfahren nach einem der vorhergehenden Ansprüche, **dadurch gekennzeichnet, daß** man die chemische Behandlung in Gegenwart eines Lösungsmittels durchführt, das ein Azeotrop mit Wasser bildet.

**12.** Verfahren nach einem der vorhergehenden Ansprüche, **dadurch gekennzeichnet, daß** man die chemische Behandlung bei einer Temperatur zwischen 150 und 250°C durchführt und im gegenteiligen Fall bei einer Temperatur nahe der Temperatur des Azeotrops.

**13.** Verfahren nach einem der vorhergehenden Ansprüche, **dadurch gekennzeichnet, daß** man einen Trocknungsschritt nach der chemischen Behandlung durchführt.

**14.** Verfahren nach einem der vorhergehenden Ansprüche, **dadurch gekennzeichnet, daß** man einen Desodorierungsschritt nach der chemischen Behandlung durchführt.

**15.** Verfahren nach einem der vorhergehenden Ansprüche, **dadurch gekennzeichnet, daß** man einen Funktionalisierungsschritt der Kohlenstoff-Kohlenstoff-Doppelbindungen, welche verbleiben, durchführt.

**16.** Polymer, das gegenüber Temperatur und Hydrolyse stabilisiert ist und geeignet ist unter Einsetzen des Verfahrens gemäß einem der Ansprüche 1 bis 15 erhalten zu werden; wobei das Polymer eine Säurezahl kleiner oder gleich 1,5 aufweist.

**17.** Polymer nach Anspruch 16, **dadurch gekennzeichnet, daß** es eine Säurezahl kleiner oder gleich 1, vorzugsweise kleiner oder gleich 0,5 aufweist.

**18.** Verwendung des Polymers nach einem der Ansprüche 16 oder 17 oder geeignet, gemäß einem der Ansprüche 1 bis 15 erhalten zu werden, als Schmiermittel oder Schmiermittelzusatz.

**19.** Verwendung des Polymers nach einem der Ansprüche 16 oder 17 oder geeignet, nach einem der Ansprüche 1 bis 15 erhalten zu werden, als Verdickungsmittel.

**20.** Verwendung des Polymers nach einem der Ansprüche 16 oder 17 oder geeignet, nach einem der Ansprüche 1 bis 15 erhalten zu werden, als Weichmacher für Polymere.

**21.** Verwendung des Polymers nach einem der Ansprüche 16 oder 17 oder geeignet, nach einem der Ansprüche 1 bis 15 erhalten zu werden, als Antiverschleißzusätze, Hochdruckzusätze, Antikorrosionszusätze.

## Claims

**1.** Method for preparing temperature- and hydrolysis-stabilized polymers, wherein the following steps are performed:

- in an oxygen-free atmosphere the heat treatment of a reagent or a mixture of reagents is conducted, resulting in a polymer containing carboxylic functions, said reagent or mixture of reagents being chosen among the esters of carboxylic acids corresponding to the formula:

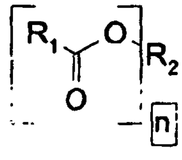

(I)

in which n is between 1 and 4, $R_1$ represents a hydrocarbon radical comprising at least one ethylenic unsaturation, linear or branched having 6 to 22 carbon atoms, $R_2$ represents a hydrocarbon radical, saturated or

unsaturated, linear or branched, having 1 to 24 carbon atoms, optionally comprising one or more hydroxyl groups;

- a chemical treatment of the resulting polymer is performed with at least one agent reacting with the carboxylic acid functions present in said polymer.

**2.** Method according to the preceding claim, **characterized in that** the heat treatment is conducted at a temperature of between 200 and 400°C.

**3.** Method according to any one of the preceding claims, **characterized in that** the chemical treatment is conducted in the presence of a first agent chosen among monoalcohols, polyols, of a second agent chosen among compounds containing at least one terminal or central epoxide group, of a third agent chosen among the hydroxides of alkaline or alkaline-earth metals, the bicarbonates of alkaline metals, quaternary ammonias, the salts of metals chosen among zinc, aluminium, lead, alkaline and alkaline-earth metals, of a fourth agent chosen among phosphorus trichloride, phosphorus pentachloride, thionyl chloride, of a fifth agent chosen among amines, these agents possibly being used alone or in combination.

**4.** Method according to any one of the preceding claims, **characterized in that** the chemical treatment is conducted in the presence of a first agent chosen among monoalcohols, polyols, and of a second agent chosen among compounds containing at least one terminal or central epoxide group.

**5.** Method according to any one of claims 3 or 4, **characterized in that** the second agent corresponds to the following formula (II):

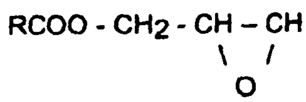

formula in which R represents a linear or branched, $C_1$-$C_{21}$ aliphatic radical.

**6.** Method according to any one of claims 3 to 5, **characterized in that** the chemical treatment is conducted in the simultaneous presence of the first and second agents.

**7.** Method according to any one of the preceding claims, **characterized in that** the proportion of the first agent is calculated to cause the acid number to be 7 or less, and the quantity of the second agent corresponds to the quantity required to reduce said acid number to a value of 1.5 or less.

**8.** Method according to any one of claims 3 to 5, **characterized in that** the chemical treatment is conducted by successively using the first and then the second agent.

**9.** Method according to any one of the preceding claims, **characterized in that** the second agent is added to the reaction mixture as soon as the acid number is 7 or less.

**10.** Method according to any one of claims 3 to 9, **characterized in that** the chemical treatment is conducted with a total amount of agent such that the number of moles of agent(s) corresponds to a stoichiometric or excess amount with respect to the number of moles of free carboxylic functions present in the polymer resulting from the heat treatment.

**11.** Method according to any one of the preceding claims, **characterized in that** the chemical treatment is conducted in the presence of a solvent forming an azeotrope with water.

**12.** Method according to any one of the preceding claims, **characterized in that** the chemical treatment is conducted at a temperature of between 150 and 250°C, and optionally at a temperature close to the temperature of the azeotrope.

**13.** Method according to any one of the preceding claims, **characterized in that** a drying step after the chemical treatment is conducted.

**14.** Method according to any one of the preceding claims, **characterized in that** a deodorizing step is conducted after the chemical treatment.

**15.** Method according to any one of the preceding claims, **characterized in that** a functionalising step is conducted of the remaining double carbon-carbon bonds.

**16.** Temperature- and hydrolysis-stabilized polymer obtainable by the method according to any one of claims 1 to 15; said polymer having an acid number of 1.5 or less.

**17.** Polymer according to any one of claim 16, **characterized in that** it has an acid number of 1 or less, preferably of 0.5 or less.

**18.** Use of a polymer according to claim 16 or claim 17, or obtainable by the method according to any one of claims 1 to 15, as lubricant or lubricant additive.

**19.** Use of the polymer according to any one of claim 16 or claim 17, or obtainable by the method according to any one of claims 1 to 15, as thickener.

**20.** Use of the polymer according to any one of claim 16 or claim 17, or obtainable by the method according to any one of claims 1 to 15, as plasticizer for polymers.

**21.** Use of the polymer according to claim 16 or claim 17, or obtainable by the method according to any one of claims 1 to 15, as antiwear additives, extreme-pressure additives, anti-corrosion additives.